Europäisches Patentamt

European Patent Office

Office européen des brevets

(11) Publication number: **0 427 496 A2**

# EUROPEAN PATENT APPLICATION

(21) Application number: 90312101.0

(22) Date of filing: 05.11.90

(51) Int. Cl.⁵: **A01K 91/00**, D01F 6/84, C08G 63/06

(30) Priority: 08.11.89 JP 288692/89

(43) Date of publication of application:
15.05.91 Bulletin 91/20

(84) Designated Contracting States:
DE FR GB

(71) Applicant: MITSUI TOATSU CHEMICALS, Inc.
2-5 Kasumigaseki 3-chome
Chiyoda-Ku Tokyo 100(JP)

(72) Inventor: Shinoda, Hosei
3-18-1 Takamori Dai
Kasugai-shi, Aichi-ken 487(JP)
Inventor: Ohtaguro, Masami
54 Santakane, Narumi-cho, Midori-ku
Nagoya-shi, Aichi-ken 485(JP)
Inventor: Morita, Kenji
55 Santakane, Narumi-cho, Midori-ku
Nagoya-shi, Aichi-ken 458(JP)

(74) Representative: Stuart, Ian Alexander et al
MEWBURN ELLIS 2 Cursitor Street
London EC4A 1BQ(GB)

(54) **Fishing tackle.**

(57) Hydrolyzable fishing tackle which comprises hydrolyzable polyester consisting essentially of recurring structural units which are at least one of a glycolic acid unit and a lactic acid unit in the molecular structure of the polymer.

## FISHING TACKLE

The present invention relates to a fishing tackle which can be hydrolyzed. More particularly, the invention relates to fishing tackle such as a fishing line and a fishhook which can be naturally decomposed by hydrolysis even though abandoned in the ocean, rivers, lakes, and marshes.

Formerly, fishing lines were natural fibers such as gut, tanned silk yarn and hemp thread. Nowadays, they are synthetic fibers including polyamide base fibers such as nylon 6 and polyester based fibers such as polyethylene terephthalate. Fishhooks are primarily metals such as steel.

These fishing lines and fishhooks are required to have high strength and good durability and materials having such performance have primarily been developed, for example, polyamide filaments disclosed in Japanese Laid-Open Patent SHO 63-227812 (1988) and aromatic polyester filaments disclosed in Japanese Laid-Open Patent SHO 63-317032 (1988). Consequently, these fish lines and fishhooks retain their high strength permanently or for a long period even in the water. Nondecomposable or scarcely decomposable materials such as nonhydrolyzable polymers and metals have conventionally been used for fishing tackle.

However, fishing tackle thrown away or abandoned in the ocean, rivers, lakes and marshes has recently caused obstruction of natural environment and injury to birds and aquatic animals. Thus, a harmful influence on nature has been recognized as a problem. For example, fishing lines and fishhooks attached thereto are left as such or thrown away in the ocean, rivers, lakes and marshes for some reason such as being caught on a rock or a piling. It has been found that these fishing lines wind themselves round a screw of ships to cause hindrance to navigation or twine round birds and aquatic animals to give a considerably harmful influence on the ecosystem. As a result, the fishing tackle leads to a large social problem with the increase of anglers.

Embodiments of the present invention may overcome the above problems and provide a fishing line and fishhook which can maintain sufficient tensile strength during use and gradually decrease in strength when left as intact or abandoned in water and finally disappear by decomposition or by being scattered by breaking into pieces.

As a result of intensive investigation in order to overcome the above problems, the present inventors have found that fishing line and fishhooks comprised of a hydrolyzable polyester consisting essentially of recurring structural units having at least a glycolic acid unit and/or a lactic acid unit in the molecular structure of the polymer can maintain sufficient tensile and flexural strengths to withstand use over the prescribed period, and when left as such or abandoned in the water, the line and fishhook gradually decrease in strength by subsequent hydrolysis and finally disappear by decomposition or by being scattered by breaking into pieces. Thus the present invention has been completed.

That is, the present invention relates to fishing tackle, such as a fishing line and/or a fishhook, comprised of a hydrolyzable polyester consisting essentially of recurring structural units having at least a glycolic acid unit and/or a lactic acid unit.

The fishing line and fishhook of the invention can maintain suitable tensile and flexural strength during use, gradually being hydrolyzed to decrease the strength after being left as such or abandoned in the ocean or rivers, and finally disappearing. Consequently, the fishing tackle of the invention gives no harmful effect on ships, birds and aquatic animals, though left as intact or abandoned in the ocean, rivers, lakes and marshes, and has a marked contribution to the environmental protection.

### Brief Description of the Drawing

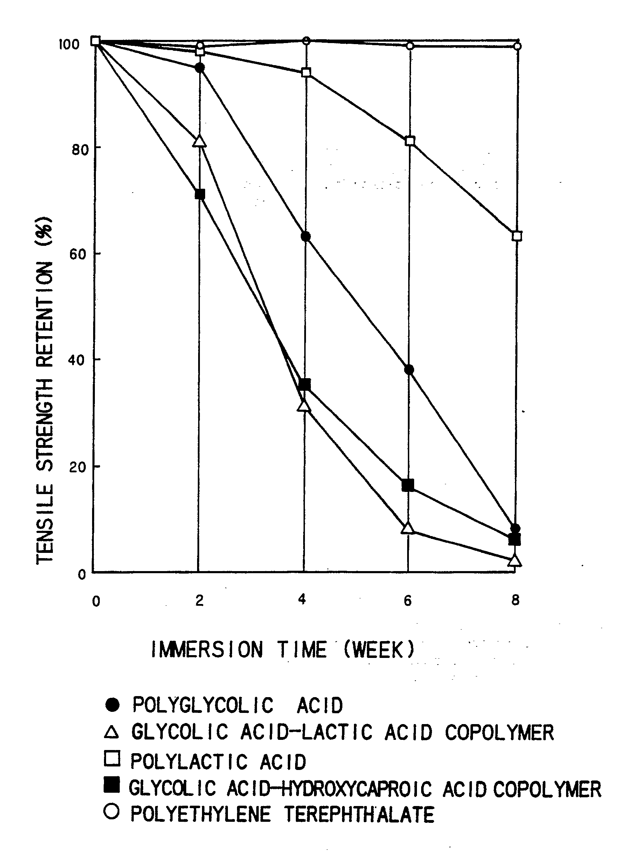

Figure 1 is a graph illustrating the variation of tensile strength after immersion of filaments obtained in Examples 1 to 4 and Comparative Example 1 at 20 °C in water.

### Description of the Preferred Embodiments

The hydrolyzable polyester of the invention has recurring structural units comprising at least one of a glycolic acid unit and a lactic acid unit in the molecular structure.

Exemplary polyesters include one or more polymers selected from the group consisting of polyglycolic acid, polylactic acid, poly-p- dioxanone, copolymers of glycolic acid with lactic acid, copolymers of glycolic acid and/or lactic acid with hydroxycaproic acid, copolymers of glycolic acid and/or lactic acid with p-dioxanone and copolymers of glycolic acid and/or lactic acid with trimethylene carbonate. Preferred polyesters include one or more polymers selected from the group consisting of polyglycolic acid, polylactic acid, copolymers of glycolic acid with lactic acid, and copolymers of glycolic acid and/or lactic acid with hydroxycaproic acid.

More preferred examples of the polyester include one or more polymers selected from the group consisting of polyglycolic acid, polylactic acid, poly-p-dioxanone, glycolic acid-lactic acid copolymers, glycolic acid-hydroxycaproic acid copolymers, lactic acid-hydroxycaproic acid copolymers, glycolic acid-lactic acid-hydroxycaproic acid copolymers, glycolic acid-p-dioxanone copolymers, lactic acid-p-dioxanone copolymers, glycolic acid-lactic acid-p-dioxanone copolymers, glycolic acid-trioxymethylene carbonate copolymers, lactic acid-trioxymethylene carbonate copolymers and glycolic acid-lactic acid-trioxymethylene carbonate copolymers.

These polymers can be easily processed into filaments and fishhooks. Particularly, high molecular weight polymers are suitably used for fishing line and fishhooks due to high tensile strength and flexural strength.

These polymers are capable of being hydrolyzed in the moiety of the glycolic acid unit or the lactic acid unit. Hence, these polymers are hydrolyzed under the environment of the sea or rivers, gradually lose strength and finally disappear by decomposition. The decomposition products, glycolic acid and lactic acid, are nontoxic and known to be very safely decomposed into carbon dioxide and water through a metabolic passway of various organisms. Consequently, application of these polymers for the manufacture of fishing line and fishhooks does not give any harmful influence on the environment.

The hydrolyzable polyester which is a raw material applied, for example, to fishing line and fishhooks is required to have strengths corresponding to respective usage in the form of filaments and molded articles.

When the polyester is used for fishing line, the preferred tensile strength is 100 kg/mm$^2$ or more and the preferred elongation at break is 20% or less. These levels of tensile strength and elongation can be accomplished by increasing the molecular weight of the above homopolymers or by selecting the proportion of monomers in the above copolymers.

An elongation at break of 20% or less is preferable because a strike can be sensitively transmitted when a fish takes the bait and workability on landing the fish is also good.

In order to obtain a hydrolyzable polyester which can satisfy the above characteristics, the following procedures are preferred in particular.

In the case of polyglycolic acid, the preferred solution viscosity of p measured at 30 °C in a solvent mixture of phenol/trichlorophenol = 10/7 by weight is in the range of from 0.8 to 1.5.

In view of mechanical strength, no particular restriction is imposed on the upper limit of the solution viscosity $\eta$. However, a solution viscosity of 1.5 or less is preferred from the standpoint of processability.

In the case of glycolic acid-lactic acid copolymers, the proportion of lactic acid unit in the copolymer is preferably 20 mol % and less or 80 mole % and more.

When the proportion of lactic acid unit is in excess of 20 mol % and less than 80 mol %, it is difficult to obtain the strength required for the fishing line and fishhook.

The lactic acid unit in the above copolymer may be L-isomer or D-isomer. It is not always necessary to constitute the copolymer with either one of the isomers alone. The L-isomer unit and D-Isomer unit may be in any arbitrary proportion. The solution viscosity $\eta$ measured at 30 °C in a solvent mixture of phenol/trichlorophenol = 10/7 is preferably from 0.8 to 2.0. The viscosity of 2.0 or less is preferred in view of processability.

In the case of polylactic acid, poly-L-lactic acid consisting of L-isomer unit alone is preferred in view of readiness in synthesis and the strength of the molded articles. The polymer has preferably a molecular weight of from 100,000 to 1,500,000 or a solution viscosity measured at 25 °C in chloroform of from 2.5 to 18.

A hydrolyzable polyester obtained by blending poly-L-lactic acid and poly-D-lactic acid can also be used. The blended polyester is excellent in mechanical strengths.

Polyglycolic acid, polylactic acid and glycolic acid-lactic acid copolymer can also be prepared by dehydrating polycondensation of glycolic acid and/or lactic acid. However, high molecular weight polymers and copolymers can be preferably prepared by ring-opening polymerization of glycolide or lactide which are dehydrated, cyclic dimers of glycolic acid and lactic acid. The ring-opening polymerization of glycolide or lactide can be conducted according to known methods, for example, as disclosed in Japanese Patents SHO 43-5192 (1968) and 49-36597 (1974).

Copolymers of glycolic acid and/or lactic acid with hydroxycaproic acid can be prepared by polymerizing glycolide and/or lactide with $\epsilon$-caprolactone in the presence of stannous octoate as a catalyst at 195 °C according to the method disclosed in Japanese LaidOpen SHO 59-82865- (1984).

Poly-p-dioxanone, copolymers of glycolic acid and/or lactic acid with p-dioxanone can be obtained according to the method of preparing copolymers of dioxanone-glycolide or copolymers of dioxanone-lactide disclosed in Japanease Laid-Open SHO 62-164718 and 62-164726 (1987), in which, for example, the copolymers are prepared by reacting p-dioxanone with 1-dodecanol in the presence of stannous octoate at 110 °C, and successively reacting at 125°C after adding L-lactide.

Copolymers of glycolic acid and/or lactic acid with trimethylene carbonate can be prepared by reacting trimethylene carbonate in the presence of lauryl alcohol and stannous octoate at 180°C, and successively reacting at 223°C after adding L-glycolide according to the method disclosed in Japanease patent SHO 63-47731(1988).

The hydrolyzable polyester consisting essentially of recurring structural units having at least one of a glycolic acid unit and a lactic acid unit in the molecular structure of the polymer of the invention can be prepared, for example, by copolymerizing glycolide or lactide with other lactones such as β-propiolactone, δ-valerolactone and octanolactone, or by polymerizing or copolymerizing glycolide, lactide or β-dioxanone in the presence of a high molecular initiator having hydroxyl groups on both ends of polymer chain, for example, polyethylene glycol.

The proportion of the glycolic acid unit and/or the lactic acid unit in the copolymer is preferably 20% by weight or more in view of strength or hydrolyzability of the molded articles.

The copolymer has also a solution viscosity (measured at 30°C in a solvent mixture of phenol/trichlorophenol) of preferably from 0.8 to 3.0 in view of the strength of the molded articles and processability.

The fishing line of the invention is prepared by using the above hydrolyzable polyester as a raw material. The fishing line may consist singly of the filament obtained by spinning the hydrolyzable polyester or may be composed of a mixture thereof with filament obtained by spinning non-hydrolyzable polymers such as polyethylene terephthalate and polyamide. The hydrolyzable polyester may be spun singly or as a mixture thereof with other hydrolyzable polyesters. Two or more kinds of the hydrolyzable polyester filaments obtained by spinning singly may be used in combination.

In admixture with the filament of nonhydrolyzable polymers, the proportion of the hydrolyzable polyester in the mixture is preferably 50% by weight or more. The proportion of less than 50% by weight is unfavorable because of low hydrolyzability. However, no particular limitation is imposed on the proportion. The proportion may be determined depending upon the use.

In preparing the fishing line of the invention, polymer powder of the hydrolyzable polyester can be used as such for the spinning material or can also be used after pelletizing with an extruder. No particular melt-spinning equipment is required. Any kind of extruder can be used for the spinning as long as it is equipped with a cylinder having a temperature control mechanism, melt-mixing portion such as a screw, and an extruder head including a spinning die.

The temperature suitable for spinning depends upon the kind and molecular weight of the polymer and is generally in the range of from 150 to 400°C. Temperatures lower than 150°C lead to too high melt viscosity and filaments having good quality cannot be obtained. On the other hand, temperatures exceeding 400°C cause unfavorable decomposition.

A commoly used spinning-die can be employed for the spinning in the inventiuon. A preferred die has a nozzle of 0.3 mm or less in diameter.

The filament thus obtained can be used as such in an unstretched state for the fishing line of the invention. Alternatively, the filament can be subjected to stretching, heat treatment or a combination of these treatments and then applied to the spinning. The resulting filament has a high strength, high elastic modulus, low elongation and low water absorption.

The form of the fishing line of the invention may be a monofilament or may be a twisted and/or knitted multifilaments. Further, the filament of hydrolyzable polyester obtained above can be twisted or knitted with non-hydrolyzable filament.

Nonhydrolyzable filaments have conventionally been used for common lines and are not hydrolyzed at all or hydrolyzed in a very slow rate in the sea water or fresh water. The nonhydrolyzable filaments include, for example, natural fibers such as silk, aromatic polyester fibers such as polyethylene terephthalate and polyamide fibers such as nylon 6.

The line is reinforced in its overall strength with the non-hydrolyzable filament present as a mixture. After the line is left as such or abandoned in water, the hydrolyzable polyester gradually decompose and disappears. The integral structure of the line is hence destroyed and the nonhydrolyzable filament portions are scattered. Each nonhydrolyzable filament portion thus scattered is very fine and weak in strength. Consequently, the residual filament portion is not liable to cause problems.

In order to enhance fish-luring effect, the line of the invention can also adhere or contain pigments, amino acids or sugars on the surface or in the interior of the line.

Further, a line can be prepared by using two or more kinds of the hydrolyzable polyester so as to utilize hydrolyzing ability and strength characteristics of each hydrolyzable polyester.

A preferred embodiment of the line in the invention includes, for example, a knitted line of multifilaments obtained by coating polylactic acid on the surface of a polyglycolic acid filament or a glycolic acid-lactic acid copolymer filament containing 20 mol % or less of the L-lactic acid unit.

The line has a favorable hydrolyzability and high strength resulting from polyglycolic acid or a glycolic acid-lactic acid copolymer containing 20 mol % or less of the L-lactic acid unit. Polylactic acid coated on the filament leads to a relatively slow rate of hydrolysis and provides enhancement in strength and prolonged period of use for the line. After being left as such or abandoned in water, the line can be expected to quickly decompose and disappear.

The fishhook of the invention can be obtained by injection molding or ccmpression molding of the above hydrolyzable polyester. Molding of the hook can be conducted by using the polymer powder as much for the material of molding. Alternatively, molding can be carried out after pelletizing the polymer powder with an extruder. No particular kind of molding machine is required and commonly used molding machines can be used for the invention. The molding temperature depends upon the kind and molecular weight of the polymer and is generally in the range of from 150 to 400 °C. Temperatures lower than 150 °C lead to too high melt viscosity and a good quality hook cannot be obtained. Temperatures exceeding 400 °C cause unfavorable decomposition.

The fishhook is required to sink in water and to have a high strength. The hydrolyzable polyester of the invention such as polyglycolic acid and polylactic acid has a density of from 1.2 to 1.6 and can sink in the water. A high molecular weight polyester has a high flexural strength and hence is extremely suitable for the hook.

In order to particularly increase the density of hook, a filler having a higher density such as barium sulfate can be added to the hydrolyzable polyester.

Coating or deposition of metals can also be conducted on the surface of the line and hook of the invention.

The present invention will hereinafter be illustrated further in detail by way of examples.

The physical properties in the examples were measured by the following methods.

## Solution viscosity

When the polymerization product was soluble in chloroform, a solution of 0.5 g/dℓ was prepared and viscosity was measured at 25± 0.05 °C with an Ubbelohde viscometer.

When the polymerization product was insoluble in chloroform, the product was dissolved in a solvent mixture composed of 10 parts by weight of phenol and 7 parts by weight of trichlorophenol at a concentration of 0.5 g/dℓ. The viscosity of the solution was measured at 30 ±0.05 °C with an Ubbelohde viscometer.

Solution viscosity $\eta$ was calculated from the following equation.

$$\eta = \log_e (T_1 / T_0 )/C$$

wherein $T_0$ = reference measuring time
$T_1$ = measuring time
$C$ = concentration of solution (0.5)

## Composition of copolymer

After dissolving the copolymer in hexafluoroisopropanol (HFIP), deuteriochloroform and tetramethylsilane were added, and ¹H-NMR spectrum was measured. According to the peak strength ratio between methylene hydrogen in the glycolic acid unit and methyl hydrogen in the lactic acid unit or methylene hydrogen in the hydroxycaproic acid unit, the mole ratio between the both ingredients was calculated.

## Residual amount of monomer

The polymer was dissolved in HEIP and measured by FID gas chromatography at a column temperature of 140 °C with a column of silicon 0V-210, 2 m X 3 mm $\phi$ in dimensions.

## Tensile strength

A common tensile tester was used. A filament 10 cm in length and 2.5 denier was used as a specimen. Strength at break and elongation were measured at a cross-head speed of 100 mm/min.

## Preparation examples of hydrolyzable polyester

Preparation Example 1 (Synthesis of polyglycolic acid)

To a thick-walled stainless steel vessel, 2 kg of glycolide was charged and 10 mℓ of a toluene solution containing 0.06 g of stannous octoate and 5.4 g of dodecyl alcohol were added. The mixture was deaerated for 2 hours under vacuum and the atmosphere was replaced by nitrogen. The mixture was then heated at 230 to 250 °C for 2 hours with stirring under a nitrogen atmosphere. Thereafter the mixture was gradually deaerated through a gas outlet tube and a glass receiver with a vacuum pump while maintaining the same temperature. The pressure in the reaction vessel was finally reduced to 3 mm Hg. After an hour from the initiation of deaeration, distillation of the monomer and low molecular weight volatiles was terminated. The interior of the reaction vessel was replaced by nitrogen and the resulting polymer was discharged from the bottom of the vessel in the form of strands and cut into pellets.

Polyglycolic acid thus obtained was almost colorless and had $\eta$ of 1.00. Residual monomer was 0.8%.

Preparation Example 2

(Synthesis of glycolic acid-lactic acid copolymer)

To a thick-walled stainless vessel, 2580 g (22.2 moles) of glycolide and 420 g (2.9 moles) of L-lactic acid were charged and 10 $m\ell$ of a toluene solution containing 0.18 g of stannous octoate and 9.0 g of dodecyl alcohol were added. The mixture was deaerated for 2 hours under vacuum and the atmosphere was replaced by nitrogen. The mixture was then heated at 220 °C for 2 hours with stirring under nitrogen atmosphere. Thereafter the mixture was gradually deaerated through a gas outlet tube and a glass receiver with a vacuum pump while maintaining the same temperature. The pressure in the reaction vessel was finally reduced to 3 mm Hg. After an hour from the initiation of deaeration, distillation of the monomer and low molecular weight volatiles were terminated. The interior of the reaction vessel was replaced by nitrogen and the resulting polymer was discharged from the bottom of the vessel in the form of strands and cut into pellets.

Polyglycolic acid thus obtained was transparent and almost colorless and had $\eta$ of 0.99. The mole ratio of the glycolic acid unit to the lactic acid unit in the copolymer was 89/11. The residual amount of glycolide and lactide were 0.6% and 0.3%, respectively.

Preparation Example 3 (Synthesis of polylactic acid)

To a thick-walled cylindrical stainless steel polymerization vessel equipped with a stirrer, 216 g (1.5 moles) of L-lactide and 0.003% by weight of stannous octoate were charged and deaerated for 2 hours under vacuum and then the atmosphere was replaced by nitrogen.

The mixture was heated at 100 °C for 2 weeks (336 hours) in an oil bath under a nitrogen atmosphere. After finishing the reaction, solidified reaction product was dissolved in chloroform and a large amount of methanol was added to the resultant solution. Precipitated white solid was filtered and dried.

The polymer thus obtained had $\eta$ of 12.6 and a molecular weight of about 950,000 which was calculated from the following viscosity equation.

$$M_v = [( \eta /545) \times 10000]^{1/0.73}$$

Preparation Example 4

(Synthesis of glycolic acid-hydroxycaproic acid copolymer)

To a thick-walled stainless steel vessel, 3248 g (28 moles) of glycolide and 456 g (4 moles) of $\epsilon$ -caprolactone were charged and 10 $m\ell$ of a toluene solution containing 0.18 g of stannous octoate and 18 g of dodecyl alcohol were added. The mixture was deaerated for 23 hours under vacuum and the atmosphere was replaced by nitrogen. Polymerization was conducted by the same procedures as described in Preparation Example 2 to obtain a copolymer.

The copolymer thus obtained was transparent and almost colorless, and had $\eta$ of 1.28. The mole ratio of the glycolic acid unit to the hydroxycaproic acid unit was 90/10. Residual amounts of glycolide and $\epsilon$ -caprolactone were 0.5% and 0.9%, respectively.

Example 1

Polyglycolic acid obtained in Preparation Example 1 was melt-spun with a common extruder at 245 °C under extrusion pressure of 100 kg/cm² and thereafter stretched 4 times at 120 °C. A monofilament thus obtained had a tensile strength of 125 kg/cm², elongation at break of 10% and was 2.5 denier which is suitable for a fishing line.

The monofilament obtained was immersed in sea water at 20 °C and the variation in tensile strength was examined. Results are illustrated in Figure 1.

A silicone based oil was adhered to the polyglycolic acid monofilament of 2.5 denier. A multifilament line was prepared by twisting 6 monofilaments so as to obtain a twist per cm. A chloroform solution of polylactic acid containing a red pigment (fish are attracted to red color) was coated on the surface of the multifilament line, and dried. The fishing line thus obtained had a tensile strength of 115 kg/mm² and an elongation at break of 9%. Handling characteristics of the line was good and the sinking speed of the line in water was fast.

The hydrolysis behavior of the line was examined at 20 °C in sea water and fresh water. More than 90% of the initial tensile strength was retained for 2 to 3 weeks after immersion. Thereafter the strength rapidly decreased, and reached about 30% of the initial strength after about 6 weeks. After 8 weeks, the line became brittle and the tensile test was almost impossible to conduct.

Exemple 2

The glycolic acid-lactic acid copolymer obtained in Preparation Example 2 was melt-spun by the same procedures as described in Example 1 except that the extrusion temperature was 235 °C. The monofilament of glycolic acid-lactic acid copolymer thus obtained was 2.5 denier, and had a tensile strength of 120 kg/mm² and an elongation at break of 13%. The monofilament was suitable for a fishing line.

The monofilament obtained was immersed in sea water at 20 °C and the variation in tensile strength was examined.
Results are illustrated in Figure 1.

The monofilament was fabricated by the same procedures as described in Example 1 to obtain a multifilament line of glycolic acid-lactic acid copolymer. The fishing line thus obtained had a tensile strength of 110 kg/mm² and an elongation at break of 11%. Handling characteristics of the line was good and the sinking speed of the line in water was fast.

The hydrolysis behavior of the line was examined at 20 °C in sea water and fresh water.

More than 60% of the initial tensile strength was retained for 2 to 3 weeks after immersion. Thereafter the strength rapidly decreased, and reached about 10% of the initial strength after about 6 weeks. After 8 weeks, the line became brittle and the tensile test was almost impossible to conduct.

Example 3

Polylactic acid obtained in Preparation Example 3 was heated to 110 °C in toluene solvent to prepare a 6% solution. The solution was spun with a spinning machine, dried to remove the solvent, and stretched 18 times at 180 °C. The polylactic acid monofilament thus obtained was 0.5 denier, and had a tensile strength of 170 kg/mm² and an elongation at break of 7%.
The monofilament was suitable for a fishing line.

The monofilament was immersed in sea water at 20 °C and the variation in tensile strength was examined.
Results are illustrated in Figure 1.

The monofilament was fabricated by the same procedures as described in Example 1 to obtain a multifilament line of polylactic acid. The fishing line thus obtained had a tensile strength of 155 kg/mm² and an elongation at break of 5%. Handling characteristics of the line was good and the sinking speed of the line in water was fast.

The hydrolysis behavior of the line was examined at 20 °C in sea water and fresh water.

More than 90% of the initial tensile strength was retained for 2 to 3 weeks after immersion. Thereafter the strength rapidly decreased, and reached about 85% of the initial strength after about 6 weeks. After 8 weeks, the strength decreased to 60 to 70%.

Example 4

The glycolic acid-hydroxycaproic acid copolymer obtained in Preparation Example 4 was spun and stretched by the same procedures as carried out in Example 1. The monofilament thus obtained was 0.5 denier, and had a tensile strength of 105 kg/mm² and an elongation at break of 18%.

The monofilament was suitable for a fishing line.

The monofilament was immersed in sea water at 20 °C and the variation in tensile strength was examined.
Results are illustrated in Figure 1.

The monofilament was fabricated by the same procedures as described in Example 1 to obtain a multifilament line of glycolic acid-hydroxycaproic acid copolymer. The fishing line thus obtained had a tensile strength of 103 kg/mm² and an elongation at break of 4%. Handling characteristics of the line was good and the sinking speed of the line in water was fast.

The hydrolysis behavior of the line was examined at 20 °C in sea water and fresh water.

From 70 to 80% of the initial tensile strength was retained for 2 to 3 weeks after immersion. Thereafter the strength rapidly decreased, and reached about 20% of the initial strength after about 6 weeks. After 8 weeks, the multifilament line became brittle and the tensile test was almost impossible to conduct.

Comparative Example 1

A monofilament composed of nonhydrolyzable polyester (polyethylene terephthalate) of 2.5 denier was immersed in sea water and the variation in tensile strength was examined. Even after 8 weeks, the initialtensile strength was approximately maintained.
Results are illustrated in Figure 1.

Example 5

A polyglycolic acid multifilament line of Example 1 prepared from 3 monofilaments of 2.5 denier and a polyethylene terephthalate multifilament line composed of 3 monofilaments of 2.5 denier, that is, 6 monofilaments were bundled, and 8 bundles thus obtained were knitted with a knitting machine. A chloroform solution of polylactic acid containing a red pigment was applied to the surface of the knitted bundles and dried.

The fishing line thus obtained was immersed at 20°C in sea water and fresh water. After about 4 months, the polyglycolic acid filaments disappeared by decomposition and the remainings, polyethylene terephthalate filaments were scattered into pieces.

Example 6

In a metal mold having dimensions of 70X150X3mm, 45 g of polylactic acid powder obtained in Preparation Example 1 was filled and heat-pressed at 200°C for 5 minutes under pressure of 200 kg/cm². The Polylactic acid specimen thus obtained had a flexural strength of 17 kg/mm² and a flexural modulus of 1000 kg/mm². The polylactic acid was a suitable material for fishhooks and could be molded with ease into the form of a fishhook.

The fishhook thus molded was immersed at 20°C in sea water and fresh water, and its hydrolysis behavior was examined. Results were approximately the same as the strength variation of polylactic acid filament illustrated in Figure 1.

Claims

1. Fishing tackle comprised of a hydrolyzable polyester consisting essentially of recurring structural units which are at least one of a glycolic acid unit and a lactic acid unit in the molecular structure of the polymer.

2. The fishing tackle of claim 1 wherein the hydrolyzable polyester is at least one polymer selected from the group consisting of polyglycolic acid, polylactic acid, poly-p-dioxanone, copolymer of glycolic acid with lactic acid, copolymer of glycolic acid and/or lactic acid with hydroxycaproic acid, copolymer of glycolic acid and/or lactic acid with p-dioxanone, and copolymer of glycolic acid and/or lactic acid with trimethylene carbonate.

3. The fishing tackle of claim 1 wherein the hydrolyzable polyester is at least one polymer selected from the group consisting of polyglycolic acid, polylactic acid, copolymer of glycolic acid with lactic acid, and copolymer of glycolic acid and/or lactic acid with hydroxycaproic acid.

4. Fishing tackle according to any preceding claim comprising a fishing line.

5. Fishing tackle according to claim 4 wherein the fishing line comprises hydrolyzable polyester which has a tensile strength at break of 100 kg/mm² or more and an elongation at break of 20% or less.

6. Fishing line comprising a twist and/or knit of a hydrolyzable filament and nonhydrolyzable filament, said hydrolyzable filament consisting essentially of recurring structural units which are at least one of glycolic acid unit and a lactic acid unit in the molecular structure of the polymer.

7. The fishing line of claim 6 wherein the hydrolyzable filament comprises at least one polymer selected from the group consisting of polyglycolic acid, polylactic acid, poly-p-dioxanone, copolymer of glycolic acid with lactic acid, copolymer of glycolic acid and/or lactic acid with hydroxycaproic acid, copolymer of glycolic acid and/or lactic acid with p-dioxanone and copolymer of glycolic acid and/or lactic acid with trimethylene carbonate.

8. The fishing line of claim 6 wherein the hydrolyzable filament comprises at least 'one polymer selected from the group consisting of polyglycolic acid, polylactic acid, copolymer of glycolic acid with lactic acid, and copolymer of glycolic acid and/or lactic acid with hydroxycaproic acid.

9. Fishing tackle according to any of claims 1-3 comprising a fishhook.

10. Fishing tackle according to claim 9 wherein the fishhook comprises hydrolyzable polyester which is at least one polymer selected from the group consisting of polyglycolic acid polylactic acid, copolymer of glycolic acid with lactic acid, copolymer of glycolic acid and/or lactic acid with hydroxycaproic acid, copolymer of glycolic acid and/or lactic acid with trimethylene carbonate.

IMMERSION TIME (WEEK)

● POLYGLYCOLIC ACID
△ GLYCOLIC ACID−LACTIC ACID COPOLYMER
□ POLYLACTIC ACID
■ GLYCOLIC ACID−HYDROXYCAPROIC ACID COPOLYMER
○ POLYETHYLENE TEREPHTHALATE